# EUROPEAN PATENT SPECIFICATION

(11) **EP 3 339 998 B1**
(45) Date of publication and mention of the grant of the patent: **31.07.2019**
(21) Application number: 17208820.5
(22) Date of filing: 20.12.2017
(51) Int. Cl.: G05B 23/02, G01N 21/25, B31B 50/00, G01J 3/28, G01N 21/89, G01N 21/88

(54) **SYSTEM AND METHOD OF INSPECTION OF A WRAPPING MATERIAL**
SYSTEM UND VERFAHREN ZUR INSPEKTION EINES VERPACKUNGSMATERIALS
SYSTÈME ET MÉTHODE D'INSPECTION DE MATÉRIAU D'ENVELOPPEMENT

(30) Priority: 21.12.2016 IT 201600129219
(43) Date of publication of application: 27.06.2018
(73) Proprietor: G.D S.p.A., 40133 Bologna (IT)
(72) Inventor: FEDERICI, Luca, 40135 Bologna (IT); SPIRITO, Gilberto, 40133 Bologna (IT)
(74) Representative: Crugnola, Pietro

(56) References cited:
- EP-A2- 2 468 508
- US-A1- 2014 137 877
- US-A1- 2015 104 563

## Description

### BACKGROUND OF THE INVENTION

The present invention relates to a system and a method of inspection of a wrapping material comprising a wrapping component and an additional material, the latter applied to the wrapping component, in a wrapping machine of the tobacco industry.

In particular, by the term "wrapping component", for example, an outer wrapping component of a package is intended, such as a soft sheet of printed paper or a blank, which is also printed, or an internal wrapping component, such as metal foil, and by the term "additional material" an adhesive material is intended, for example vinyl glue or hot-melt glue, ink, or an aromatic substance.

The present invention relates for example to a system and a method of inspection of a wrapping component to which an additional material is applied the composition of which is variable over time, to which the following description will refer explicitly without loss of generality thereby.

### PRIOR ART

Automatic packaging machines are known for packages, such as groups of cigarettes or groups of cigarette packets, in which each group is advanced by a conveyor along an wrapping advancing and forming path, in which the group is housed in and/or wrapped by and/or receives one or more wrapping materials.

Such wrapping materials typically comprise an internal wrapping component for wrapping and stabilizing the group of cigarettes or the group of packets of cigarettes, so as to form an enclosure, and one or more external wrapping components, provided with writing or logos intended for a user and/or for protecting from humidity the enclosure, i.e. the wrapped group, that forms the package.

An internal wrapping component is, for example, in a packet of cigarettes, a sheet of tinfoil or metal foil for wrapping a group of cigarettes.

In the case of production of aromatised cigarettes, before the sheet of metal foil is wrapped around the group of cigarettes, aromatising substances are usually applied to portions of said sheet. In this manner, the aromatising substances, being volatile, are transferred to the cigarettes, aromatizing the cigarettes, in the time that elapses between the production of the package and use by a consumer.

An outer wrapping component can for example be a soft sheet of printed paper and/or a blank (i.e. a rigid card) which is also printed, for wrapping the group of cigarettes or the group of packets of cigarettes that are in turn wrapped in the inner wrapping component, to make respectively a packet of cigarettes and/or a soft carton of packets or a packet of cigarettes and/or a rigid carton of packets.

To the outer wrapping component an additional material is applied such as adhesive material, to weld parts of the outer wrapping component, both together and to other wrapping components, such as for example a collar or the inner wrapping component.

The adhesive material is applied to the outer wrapping component by a respective unit comprising a conveyor for advancing the outer wrapping component along a set path, and one or more applying devices distributed along the said path to apply the adhesive material to the wrapping material.

One type of applying device, used above all if the outer wrapping component is a soft sheet of printed paper, comprises at least one roller that is suitable for rolling in contact with the sheet during advancing of the sheet. The roller is arranged in contact with adhesive material contained in a tank to deposit strip portions of adhesive material on the label during the aforesaid rolling. Typically, the adhesive material used with roller applicators is vinyl glue, applied cold that contains a watery part that has to evaporate completely so that the glue exerts adhesive force. The vinyl glue requires a long time to dry and requires stabilization of the package whose parts have the vinyl glue applied. Alternatively, if the outer wrapping component is a rigid card blank, the adhesive material is generally applied by applying devices such as spray guns and/or by spreading guns, which spray punctiform portions and/or spread strip portions of adhesive material (the so-called "glue dots") through a plurality of nozzles, synchronized with the transit of the blanks in front of the guns. Typically, the adhesive material used with the guns is hot-melt glue, which is applied hot and the adhesive force of which is exerted after cooling, which normally occurs after a very short time. Advantageously, applying the adhesive material can provide both hot-melt glue and vinyl glue, the former for initially fixing together in a short time parts of the wrapping component, the latter for completing the formation of the packaging, stabilizing the package over a longer time.

In addition, also inks can be optionally added to the inner wrapping component and/or to the outer wrapping component, generally to the outer wrapping component, during formation of the wrapping, to print on portions of the wrapping component graphic signs, logos or graphic codes (bar codes of QR codes), identifying significant information, for example the production batch.

Correct application of the additional material, such as the adhesive material and/or the ink and/or the aromatizing substance, to portions of a wrapping component of a package is a critical point in each wrapping machine.

For example, both the adhesive material and the aromatizing substances are additional sticky materials that have to be applied to precise portions of the respective wrapping component, sheet of metal foil or blank, to prevent mechanical members for forming the enclosure being able to get dirty in an undesired manner. The same thing also applies to a possible ink-jet printed portion that also requires precise positioning.

This is even more valid if some types of cigarette packet are considered, the so-called "special packets" such as round corner packets, octagonal packets, superslim formats or boxed lids, demand for which is increasing continuously, which require great precision in the application of the portions of adhesive material and/or in the ink printing because the adhesive material and/or the ink can be applied only to superimposed areas the dimension of which is very limited.

An excess and/or incorrect positioning of such additional materials can dirty mechanical members and packages and thus generate machine stops with consequent higher production costs.

On the other hand, insufficiency or lack of adhesive material and/or of ink and/or of aromatizing substance can give rise respectively to packages that are incorrectly closed and/or are not printed and/or to cigarettes that are not aromatized, and can i.e. generate defective packages.

In order to avoid packaging of defective packages, which are provided with a sheet that is not correctly aromatized and/or with an outer wrapping that is not correctly closed and/or not correctly printed, an inspection is necessary of the respective wrapping component, before wrapping to form an enclosure and/or a package, to check the portions to which the additional material is applied.

The purpose of inspecting the wrapping component is above all to identify the positioning of these portions in the wrapping component.

With regard to the adhesive material, an optical inspection of the outer wrapping component is nevertheless not effective because the adhesive material is white or transparent and thus the portions of adhesive material are difficult to identify on the wrapping component to which they are applied. The same consideration also applies to aromatizing substances inasmuch as the aromatized portions impregnate the metal foil but are not distinguishable in the metal foil.

It is added that an optical inspection of the adhesive material and/or of the ink and/or of the aromatizing substance is not able to provide an indication or measurement of the drying or cooling percentage of the additional material.

For example, if an outer wrapping component is folded to form a package when the hot-melt has cooled down completely, for example because of a machine stop before the formation of the package, the hot melt glue is no longer active and the resulting package is defective.

For the check of the drying of the single hot-melt glue dots, in the past the use of infrared punctiform sensors was proposed that are nevertheless hardly reliable. In addition, such sensors require, with the varying of the arrangement of the glue dots and/or strips on the wrapping material and with the varying of the type of adhesive material and or wrapping material, the spatial arrangement of the sensors and the adjustment thereof to be accordingly adjusted, in accordance with the type of material to be inspected.

With regard to the printed portions, if the ink of the printed portion has not become sufficiently dried when the package is formed, the ink can give rise to smudges in the outer wrapping component that make the quality of the package unacceptable.

At the high operating speeds of packaging machines, WO02/09942 has proposed arranging a drying device, configured for drying the ink at least partially, above the conveyor of the wrapping component to be printed and downstream of the printing device itself. The optical inspection of the printed portions, downstream of the printing device and of the drying device, whilst enabling the position of the printed portions in the blank to be checked, is nevertheless not suitable for providing information on the completion of drying. To ensure the latter, WO02/09942 proposes arranging, downstream of the drying device, a storage device for housing the printed blanks and completing drying of the ink, inside which each printed wrapping component remains for a suitably chosen duration, i.e. overdimensioned with respect to the minimum necessary time.

The storage device reduces the production efficiency of the wrapping machine, making the wrapping machine more expensive and complex at the same time.

US 2015/104563 A1 discloses a device and a method for inspecting the deposition of hot melt onto an object to be assembled. A comparison is made between sensed images of the object after application of the hot melt and a predetermined standard to determine if the construction integrity of the object made with the hot melt is within the range established by the standard. Composite images from a sensor operating in the infrared band and another sensor reveal physical features of the object, as well as provide registration information about the placement of the hot melt on the assembled object. Composite images also present a way to visually ascertain ongoing or past production operations in order to trace problems with the raw material used for the object, as well as for the construction process of the object with the hot melt.

EP 2 468 508 A2 discloses a method and a system for consistently determining chromatic characteristics of objects which include non-opaque portions. The system comprises a conveying apparatus for conveying an object, the object having at least a non-opaque portion, the conveying apparatus including a light source, an optical detector (for example a hyperspectral imager) and a backing measurement apparatus. The light source is for illuminating the object and the optical detector is for acquiring information at least relating to at least one chromatic characteristic of the non-opaque portion. The backing measurement apparatus includes a backing material, a backing support and a plurality of rollers. The backing material exhibits at least one of determined chromatic characteristics and determined optical characteristics, the backing support is for supporting the backing material and the plurality of rollers is for rolling the backing material over the backing support. The light emitted by the light source optically interacts with the backing material consistently through the non-opaque portion.

US 2014/137877 A1 discloses a method and a system for blending of agricultural product utilizing hyperspectral imaging. At least one region along a sample of agricultural product is scanned using at least one light source of different wavelengths. Hyperspectral images are generated from the at least one region. A spectral fingerprint for the sample of agricultural product is formed from the hyperspectral images. A plurality of samples of agricultural product is blended based on the spectral fingerprints of the samples according to parameters determined by executing a blending algorithm.

### DESCRIPTION OF THE INVENTION

The object of the present invention is to provide a system and a method of inspection that are free of the drawbacks disclosed above that is at the same time easy and cheap to make.

A further object of the present invention is to provide a system and a method of inspection that enable an additional material, adhesive material and/or ink and/or aromatizing substances to be detected in a wrapping component to determine positioning of the additional material in the wrapping component.

Another object of the present invention is to further provide a system and a method of inspection that are able to identify a degree of drying and/or cooling of the additional material to ensure the forming of the enclosure and/or of the package only if the additional material has the desired degree of drying and/or cooling.

Another object of the present invention is to provide a system and a method of inspection that permits rapid setting up with the varying of the wrapping component and of the additional material.

In accordance with the present invention, a system and a method of inspection according to what is claimed in the attached claims is provided.

### SHORT DESCRIPTION OF THE DRAWINGS

The present invention will now be disclosed with reference to the attached drawings that illustrate some embodiments thereof by way of non-limiting example, in which:
- figure 1 is a schematic axonometric view of a system of inspection of an outer wrapping component, such as a card blank, according to the invention;
- figure 2 is a schematic view of a control unit of a wrapping machine supplementing the system of inspection of figure 1.
- figure 3 is a schematic view of a system of inspection of an outer wrapping component web component, for example a soft sheet of paper, before the division into pieces, according to the invention.

### PREFERRED EMBODIMENTS OF THE INVENTION

In this description, identical elements that are common to the illustrated embodiments are indicated by the same numbering.

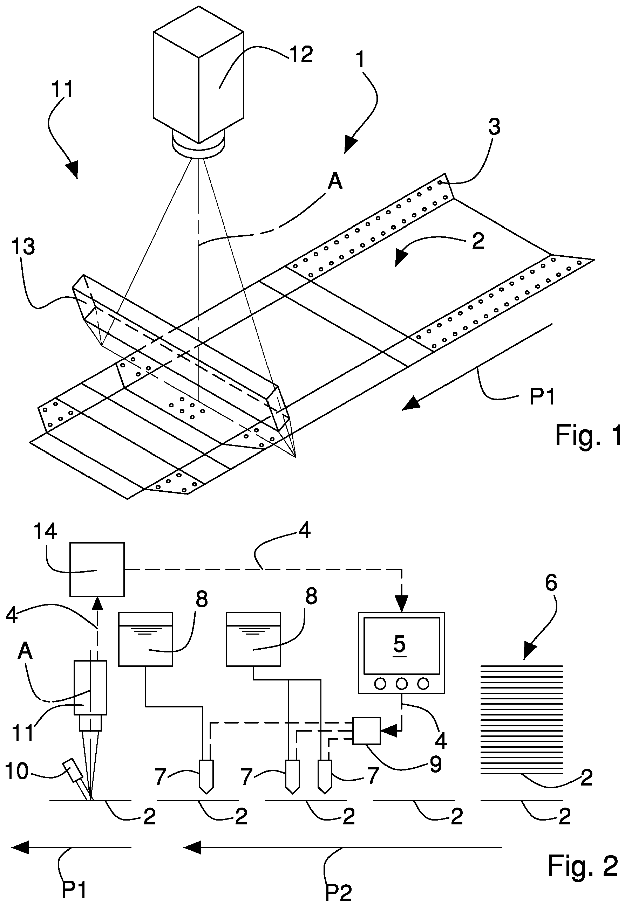

As illustrated in figures 1 to 3, by number 1 overall a system of inspection of a wrapping material is illustrated in a wrapping machine (not illustrated) of the tobacco industry, in which the wrapping material comprises a wrapping component 2 to which an additional material 3 is applied. The additional material 3 is usually applied in regions of the wrapping component 2.

The inspection system 1 can be for example advantageously integrated into a machine for making a package, for example a packet of cigarettes or a carton of packets of cigarettes.

The wrapping component 2 can be an inner wrapping component, for making an enclosure that wraps for example a group of cigarettes, or one or more outer wrapping components, to wrap the enclosure to make the package.

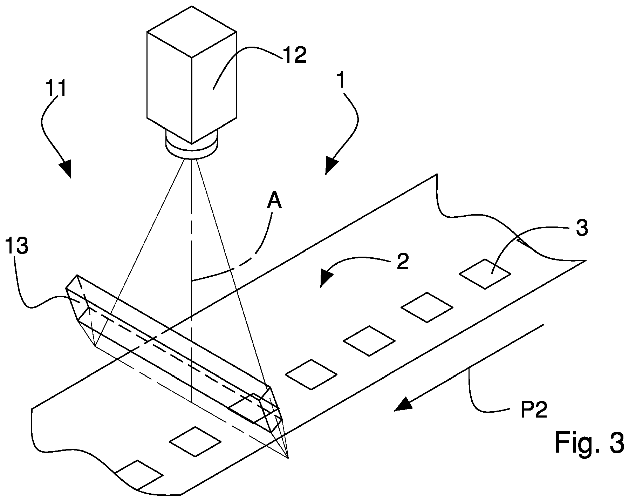

An internal wrapping component is, for example and without losing generality, in a packet of cigarettes, a sheet of tinfoil or metal foil (not illustrated) for wrapping a group of cigarettes. An outer wrapping component is, for example as illustrated in figure 1, a rigid card blank for making a hinged-lid packet for cigarettes or, as shown in figure 3, a web of a soft sheet of paper, before it is divided into pieces.

The additional material 3 can be of different types, i.e. adhesive material, for example vinyl glue or hot melt glue, applied in a plurality of punctiform regions to the blank 2, as shown in figures 1 and 2, or can be ink, applied in equidistant regions of the web 2, as shown in figure 3. The additional material 3 can also be an aromatizing substance (not illustrated), applied for example in a plurality of regions to the inner wrapper.

In one embodiment of wrapping material that is not illustrated, several types of additional material 3 can be present simultaneously in the wrapping material 2, for example both vinyl glue and hot-melt glue can be applied to a blank 2.

The definition of "wrapping material", of "wrapping component", and of "additional material" has been amply supplied previously and for the sake of brevity will not be repeated here.

As shown in figure 2, the system of inspection 1 is connected by a communication network 4 to a control apparatus 5 for controlling the wrapping machine, typically the machine control unit, to exchange data and/or commands with the control apparatus. The system of inspection 1 can for example receive an inspection start command from
the control apparatus 5 and provide the control apparatus 5 itself with a result of the inspection, for example a quality index of the inspected wrapping material, as will be seen better below.

Alternatively, the system of inspection 1 can activate autonomously inspection of the wrapping material and provide the control apparatus 5 with the result of the inspection.

The system of inspection 1 comprises a hyperspectral inspection station and a respective conveyor (not illustrated) for advancing the wrapping material through the inspection station along an advancing path P1.

As said previously, to apply adhesive material 3 to the blank 2, the wrapping machine comprises an applying unit for applying adhesive material 3 comprising a respective conveyor (not illustrated) to advance the blank 2 along a predetermined advancing path P2. Each blank 2 is removed from a magazine 6, in which the blanks 2 lie, in a planar configuration, stacked together. The applying unit comprises one or more applying devices 7, i.e. spray guns, each of which is connected to adhesive material supply tanks 8. The applying devices 7 are distributed along the aforesaid path P2 to apply the adhesive material 3 to the blank 2.

The applying unit further comprises a control device 9, connected by a respective communication network 4 to the control apparatus 5 of the wrapping machine, and to the guns 7, to check the application of the adhesive material 3 to the blanks 2 synchronized with the advance of the blanks in front of the guns 7.

The inspection station is arranged downstream of the applying unit of the adhesive material 3, considering a forming path of the blanks 2, of which both the advancing path P1 through the inspection station and the advancing path P2 through the applying unit are part, and an advancing direction of the blanks in the forming path from the advancing path P2 to part of the advancing path P1.

The inspection station is configured for communicating a result of the inspection to the control apparatus 5 of the wrapping machine, which can discard directly the wrapping material inspected that is judged not to meet the required quality requirements as soon as the blank 2 reaches a reject station.

Alternatively, advantageously, if as shown in figure 2 the inspection system is integrated into the wrapping machine, the result of the inspection can be used to modify the working operating parameters of the applying unit itself, to correct possible defects in
the application of the adhesive material 3.

Although reference is made to an applying unit for applying adhesive material 3, we wish to point out that the same considerations apply without restriction in generality to an applying device for applying ink or aromatizing substances that are not disclosed here.

The hyperspectral inspection station is configured for conducting a hyperspectral analysis of the wrapping material.

The hyperspectral inspection station comprises an illuminator 10, configured for illuminating at least one line of wrapping material by a light containing a plurality of wavelengths, and a hyperspectral optical device 11 configured for receiving at least one line of light reflected by the wrapping material 2, 3, obtaining a corresponding plane of a hyperspectral cube and reconstructing a hyperspectral image from the planes of the spectral cube, during advancing of the wrapping material in the path P1 through the inspection station.

With the term hyperspectral image of an observed object a digital image is intended in which each element of the image (pixel) consists not of just one number or of a triad of numbers, as for the usual colour images (RGB), but of an entire reflectance spectrum associated with the observed point.

An electromagnetic spectrum is the set of all the possible electromagnetic waves and is usually divided into seven regions, each of which is distinguished by a different gradually decreasing wavelength interval consisting of radio waves, microwaves, visible infrared rays, ultraviolet rays, X-rays and gamma rays.

Usually, in an image acquisition optical apparatus, an image is acquired from dots of an object on the wavelengths perceived by the human eye and every image element, pixel, consists of a simple monochrome value (image in grey scale), or of a triad of values (RGB colour image) that is associable with a representation of a corresponding observed point of the object. On the other hand, each element, pixel, of a hyperspectral image, has a plurality of values associated, each value corresponding to the "reflectance" of the observed point on a certain wavelength band. The wavelength bands are selected so as to be contiguous each other and are so numerous (from a few dozen to a few hundred) so that each pixel can even be assigned a "reflectance spectrum".

The "reflectance" of a surface of a material is a number comprised between 0 and 1 that expresses the capacity of a material to reflect the incident radiant energy.

The "reflectance spectrum" expresses graphically the "reflectance" value of the point observed with the variation of the wavelengths, i.e. of the different contiguous wavelengths considered.

It should be observed that the reflectance spectrum of a point of a surface of an object that comprises several components is determined by the number and type of these components, by a corresponding concentration between the components and the corresponding dimensions thereof. A reflectance spectrum thus identifies clearly the composition, at the inspected point of the surface, of an object and is the equivalent of a "spectral signature" of the composition itself in the inspected point that enables the chemical and physical properties of the inspected objects to be characterized very precisely.

If a line of wrapping material to be inspected is now considered, this line is a set of contiguous points. Considering that each point corresponds to a set of reflectance values that are the same in number as the wavelength bands used, the line of wrapping material corresponds to a plane of a hyperspectral cube of the same width as the dimensions of the line to be inspected.

For the hyperspectral analysis of the wrapping material, frequency bands are used that extend in the ultraviolet, visible and/or infrared spectrum.

As shown in figures 1 and 3, the hyperspectral optical device 11 comprises a traditional image acquisition optical apparatus 12, having an optical axis A, which is sensitive to the intensity of the light received, a geometric filter (not illustrated) to pass a thin line of light reflected by the wrapping material, and a dispersing element 13, for example a prism, that is able to separate the different wavelengths that make up the line of filtered light that traverses the geometric filter in the different bands. Each point of the line of light that traverses the filter is thus broken down into the various spectral components by the prism 13, each of which is received by the sensor of the optical apparatus 12. The hyperspectral image is thus reconstructed by lines from the planes of a hyperspectral cube that are acquired in succession.

A hyperspectral analysis of the wrapping material, i.e. of the wrapping component 2 and of the additional material 3 thus enables, for each point of the wrapping material inspected, a spectral signature to be obtained that is able to distinguish changes in characteristics of the wrapping component 2 and/or of the additional material 3.

It has been said that the wrapping component 2 is comprised in the group comprising raw paper, printed paper, metal foil, multilayered material, i.e. can be for example a soft sheet of printed or non-printed paper, printed or non-printed card, metal foil or a polylaminate multilayered plastic material.

It should be noted that the wrapping component 2 does not vary over time.

The additional material 3 is on the other hand included in the group: adhesive material, for example vinyl glue or hot melt glue, ink, aromatizing substances and has characteristics that vary over time.

If the additional material 3 is vinyl glue, an aromatizing substance or ink, this material comprises a water percentage that varies over time as the water evaporates from the additional material.

Experimentally, it has been established that the spectral signatures of this additional material 3 vary over time with the variation of the water percentage contained in the material 3.

On the other hand, if the additional material is a hot-melt glue, this material is a plastic material obtained from the melting of synthetic resins and thermoplastic rubbers, possesses maximum efficacy if applied in a temperature range of between 140° and 200° and no longer has any adhesive efficacy if it is at a temperature below 60°. During cooling, the plastic material constituting the hot-melt glue polymerizes. Accordingly, even if the additional material 3 is hot-melt glue, it has been established experimentally that the spectral signatures of this additional material 3 vary over time, varying the polymerization of the additional material 3.

According to the invention, the hyperspectral inspection station is optionally configured for performing, in a configuration step, a hyperspectral analysis of the wrapping component 2 and/or of the additional material 3 in at least two subsequent moments of time for obtaining a set of reference spectra corresponding to changes over time of characteristics of the wrapping component 2 and/or of the additional material 3. Alternatively, the hyperspectral analysis of the wrapping component 2 and/or of the additional material 3 over time can also be performed in a hyperspectral inspection laboratory station, for example in the laboratory of the production facility in which the wrapping machine is positioned.

The hyperspectral analysis is conducted on parts of wrapping material, in which additional material 3 has been applied to the wrapping component 2 by the applying unit of the additional material 3 itself or by an operator, manually.

The hyperspectral inspection station is configured for storing the set of reference spectra, to be used in a working operational step of the system of inspection 1.

The system of inspection 1 in fact comprises a processing device 14 that is configured, in a working operational step, to process the obtained hyperspectral image by the inspection station, identify the changes of the inspected wrapping component 2 and/or of the inspected additional material 3 using the reference spectra stored in the configuration step and reconstruct a hyperspectral map with which to assign a quality index to the wrapping material, as will be seen better below.

In use, according to the present invention, it has been said that a method of inspection is proposed for inspecting a wrapping material in a wrapping machine of the tobacco industry, in which the wrapping material comprises a wrapping component 2 onto which at least one additional material 3 is applied.

The method of inspection provides an initial configuration step that precedes a working operational step.

In the initial configuration step, a hyperspectral analysis is conducted of the wrapping component 2 and/or of the additional material 3 in at least two subsequent moments of time to obtain a set of reference spectra corresponding to changes of characteristics of the wrapping component 2 and/or of the additional material 3 over time.

If, as seen previously, the wrapping component 2 is unvarying over time, the hyperspectral analysis of the wrapping component is run, in the configuration step, to store the corresponding reference spectrum. Taking into consideration every possible wrapping component 2, the different sizes and/or brands, the method of the present invention provides for constructing a database of reference spectra of the wrapping component 2 for the wrapping machine of interest but, alternatively, known reference spectra can be considered that are obtainable from specialized databases.

The initial configuration step further comprises the execution of the hyperspectral analysis of the additional material 3, applied to the wrapping component 2, in subsequent moments of time.

It is pointed out that if the wrapping component 2 has characteristics that are variable over time, what is valid for the additional material 3 is also valid for the wrapping component 2.

The initial configuration step thus comprises successive storage of the plurality of reference spectra of the additional material 3 at set intervals of time during a step of drying of the additional material 3, the term drying meaning both the loss of water that occurs over time for the vinyl glue, the ink and the aromatizing substances, and the polymerization of the hot-melt glue during cooling that leads the hot-melt glue to solidify over time.

The duration of the drying of the additional material 3 is not known *a priori* and can vary with the varying of the ambient working conditions of the wrapping machine, for example if the wrapping machine is installed in a working environment with high humidity or a high temperature, or with the varying of the wrapping component 2 to which the additional material 3 is applied.

Advantageously, the configuration step further comprises a calculating step for calculating the duration of the drying step, which is comprised between one dispensing of the additional material 3 and complete drying of the additional material 3, identified by the fact that two subsequent stored hyperspectra of the additional material 3 are unvarying over time.

The preset interval of time between the acquisition of two subsequent reference spectra is settable by an operator, in relation to the desired precision in identifying the changes of the characteristics of the additional material 3.

It has been said that the additional material 3 is usually applied to predefined regions of the wrapping component 2.

In the configuration step, advantageously, a hyperspectral analysis is conducted for zones of all the wrapping material and each region in which the additional material 3 is applied can also be divided into different inspection zones.

It should be noted that, owing to the hyperspectral analysis of the wrapping material, it is not only possible to highlight the presence of additional material 3 with respect to the wrapping component 2 but it is also possible to distinguish "which" additional material 3 it is, the changes of the wrapping component 2 and/or of the additional material 3 being distinguishable over time owing to the different spectral signatures of each change.

For this reason, advantageously, the configuration step provides for defining "where" the additional material 3 has to be arranged in the wrapping component 2, and also determines "which" additional material 3 is acceptable in order to have a wrapping material of the required quality.

The configuration step in fact provides for defining a set of reference maps of the wrapping material, each associated with a different quality index of the wrapping material.

The quality index is determined, the additional material 3 being applied to the wrapping component 2 in the preset regions, by a spatial arrangement of the additional material 3 in the preset regions of the wrapping component 2 and/or by the changes of characteristics of the wrapping component 2 and/or of the additional material 3 that are present in the reference map of the wrapping material.

In other words, in the configuration step, in addition to the definition of the reference spectra of the wrapping component 2 and/or of the additional material 3, it is possible to establish in which zone of the wrapping material the additional material 3 has to be present and, if present, what the changes of the characteristics of the additional material 3 are that make the wrapping material still acceptable or non-defective.

The reference maps of the wrapping material provide a two-dimensional geometric representation of the wrapping material and, in addition, each zone inspected in the configuration step provides an indication of the chemical and/or physical characteristics that have to be present in the corresponding zone (or point) of the wrapping material in the working operational step.

For example, in the definition of the reference maps different colours or different levels of grey can be assigned to different reference spectra, corresponding to changes of characteristics of the inspected additional material 3 and/or to the inspected wrapping component 2. The colours that are possibly present in the different zones that make up the reference maps are "false colours" in the sense that they do not correspond to a real colour of the inspected wrapping material but represent a chemical and/or physical characteristic of the inspected material that has to be present in the wrapping material in the working operational step.

Optionally, with each region, divided into the respective inspection zones, it is possible to associate a corresponding quality value that provides an indication of whether the additional material 3 is present, of what the changes of the characteristics of the additional material 3 are that make the region still acceptable or not defective.

The quality index of the wrapping material is a general indicator determined from the quality values of the respective regions.

It should be noted that, considering the spectral responses of the wrapping material in infrared, it is possible to recognize, distinguish and also map the temperature of the observed material, in addition to the chemical composition, without the need to use further sensors.

If the additional material 3 is applied to the wrapping component 2 in the preset regions, the quality index is also determined by a form of the application regions of the additional material 3, which can be different from an ideal shape but only within an acceptance threshold. There can be smudges of the additional material 3 in the reference maps, for example for the adhesive material or the aromatizing substances, but smudges cannot be accepted for the ink.

It should thus be noted that the quality index is determined by a form and by a quality value of said application regions.

The working operational step comprises the steps of advancing the wrapping material along a preset advancing path P1 and performing a hyperspectral analysis of the wrapping material during said advancing, to obtain a hyperspectral image of the wrapping material.

It should be noted that whilst the hyperspectral analysis of the wrapping material is performed in moments of time that are subsequent in the configuration step, also only on parts of the wrapping material in order to determine the reference spectra of the wrapping material, the hyperspectral analysis is conducted during the working operational step in order to inspect the wrapping material being produced.

The method of inspection further provides a processing step of the obtained hyperspectral image, using the reference spectra that had been stored in the configuration step, preceding the working operational step, in order to identify the changes of characteristics of the wrapping component 2 and/or of the additional material 3.

By reconstructing a hyperspectral map in the wrapping material, which represents the wrapping material and specifies at each point of the wrapping material the identified changes of characteristics of the wrapping component 2 and/or of the additional material 3, and by analyzing this reconstructed hyperspectral map, a quality index can thus be assigned to the wrapping material.

Similarly to what has been said previously for the reference map, the reconstructed hyperspectral map is also a bidimensional geometric representation by zones of the wrapping material that uses "false colours", and which thus represents the positioning and composition of the additional material 3 applied to the wrapping component 2.

The step of analyzing the reconstructed hyperspectral map comprises a comparison step for comparing between the reconstructed hyperspectral map and the maps of the set of the reference maps. By selecting the reference map nearest the reconstructed hyperspectral map, the wrapping material is assigned the quality index associated with the selected reference map.

The comparison is usually made by inspection zones, so as to assign the correct quality value to each inspected region in which the additional material 2 is applied and so as to obtain the overall quality index from the different quality values.

Purely by way of example, the quality index can be chosen from a plurality of quality indexes corresponding for example to: wrapping material to be rejected because of the absence or incorrect spatial arrangement of the additional material 3 on the wrapping component 2; wrapping material having a correct spatial arrangement of the additional material 3 on the wrapping component 2 but the wrapping material is unusable because of excess drying of an adhesive material; wrapping material having a correct spatial arrangement of the additional material 3 on the wrapping component 2 but wrapping material is unusable because of incomplete drying of an ink; or wrapping material devoid of significant defects and of good quality.

In order to run the hyperspectral analysis of the wrapping material, the method provides for illuminating the wrapping material by lines so that an optical apparatus for the hyperspectral analysis 11, as detailed previously, can receive one after the other the light reflected therefrom and can obtain corresponding planes of hyperspectral darkness by means of which to reconstruct the hyperspectral image of the inspected wrapping material.

In order to control the wrapping machine, the previously disclosed method of inspection of the wrapping material is used. Advantageously, in fact, the application of the additional material 3 to the wrapping component 2 can be modified according to the quality index of the inspected wrapping material.

For example, if the method of inspection identifies the presence in a blank, in the correct preset position, of cold hot melt glue, which is thus no longer able to perform the function of assembling the product, the blank can be rejected or can activate, downstream of the inspection station, a heating device for heating the hot melt glue.

If on the other hand some zones, in which the additional material 3 would be provided, were devoid of glue, one or more applying devices like the guns 7 could be dirty or faulty and thus the method of control of the wrapping machine could force a cleaning step of the applying devices, or a machine downtime step for reasons of extraordinary maintenance.

It should be noted that, advantageously, it is possible to use the quality value associated with a specific inspection region to intervene specifically on the applying device of the adhesive material 3 in the region.

Owing to the system and to the method of inspection of the present invention, it is thus possible, simply and cheaply, to inspect the wrapping material because the hyperspectral inspection always enables the additional material 3 that is applied to the wrapping component 2 to be identified, even if a traditional optical inspection is impossible.

In addition, the configuration step of the method of inspection proposed here, which analyzes the changes of the chemical and/or physical characteristics over time of the additional material 3 and/or of the wrapping component 2, enables not only the positioning of the application of the additional material 3 to be controlled but also enables it to be checked that the additional material 3, the composition of which varies over time, is or is not completely dried or cooled.

Defining the reference maps, which provide both the spatially arrangement of the additional material 3 in the wrapping component 2 and the changes of characteristics of the wrapping component 2 and/or of the additional material 3 in each region in which the additional material 3 is provided, ensures great detail on the type of additional material 3 which has to be present, or optionally on the different types of additional material 3, which have to be present.

By using during the working operational step the set of reference spectra stored during the configuration step, also great efficiency is ensured in processing times, because the processing device of the system of inspection, which has to identify the changes of the chemical-physical characteristics of the wrapping component 2 and/or of the additional material 3, has to make only a limited number of comparisons.

In addition, as the configuration step is provided whenever the wrapping material varies, the step of setting up of the new wrapping material is integrated into the method of inspection and does not require supplementary additional procedures that are costly for technical operators of the wrapping machine.

## Claims

1. Method of inspection of a wrapping material (2, 3) in a wrapping machine of the tobacco industry, wherein the wrapping material (2, 3) comprises a wrapping component (2) on which at least one additional material is applied (3); the method of inspection comprising:
- an initial configuration step, comprising a step of:
- implementing a hyperspectral analysis of the wrapping component (2) and/or of the additional material (3) during at least two subsequent moments of time for obtaining a set of reference spectra corresponding to changes over time of characteristics of the wrapping component (2) and/ or of the additional material (3);
- storing in succession the plurality of reference spectra of the wrapping component (2) and/or of the additional material (3) at set intervals of time during a step of drying of the additional material (3)
- a working operational step, comprising the steps of:
- advancing the wrapping material (2, 3) along a predetermined advancing path (PI);
- implementing a hyperspectral analysis of the wrapping material (2, 3) during said advancing for obtaining a hyperspectral image of the wrapping material (2, 3);
- processing the acquired hyperspectral image by means of the reference spectra for identifying the changes of characteristics of the wrapping component (2) and/or of the additional material (3);
- reconstructing a hyperspectral map indicating the identified changes of characteristics of the wrapping component (2) and/or of the additional material (3);
- analysing the reconstructed hyperspectral map in order to assign a quality index to the wrapping material.

2. Method of inspection according to claim 1, wherein the configuration step also comprises a calculating step for calculating the duration of the drying step, said duration being included between a delivery of the additional material (3) and a complete drying of the additional material (3) itself, which complete drying is identified by the fact that two subsequent stored spectra of the additional material (3) are invariant over time.

3. Method of inspection according to one of the preceding claims, wherein the configuration step also comprises a definition step for defining a set of reference maps, each of them associated to a different quality index of the wrapping material (2, 3), said quality index being determined, if the additional material (3) is applied to the wrapping material (2) in pre-established regions, by a space arrangement of the additional material (3) in the wrapping component (2) in the pre-established regions and/or by changes of characteristics of the wrapping component (2) and/or of the additional material (3) present in the reference map.

4. Method of inspection according to claim 3, wherein, the quality index is also determined by a form and by a quality value of the said regions.

5. Method of inspection according to claim 3, or 4, wherein the step of analysing the reconstructed hyperspectral map comprises a comparison step for comparing the reconstructed hyperspectral map to the maps of the set of reference maps, selecting a reference map which is the most similar to the reconstructed hyperspectral map and attributing to the wrapping material (2, 3) the quality index associated to the selected reference map.

6. Method of inspection according to one of the preceding claims, wherein implementing a hyperspectral analysis of the wrapping material (2, 3) to obtain a hyperspectral image comprising the following steps:
- a step of lighting of at least one line of the wrapping material (2, 3) by means of a light containing a plurality of wavelength;
- a step of receiving of at least one line of reflected light from the wrapping material (2, 3) by means of a hyperspectral optical device (11) to obtain a corresponding plane of a hyper spectral cube;
- a step of reconstructing the hyperspectral image through lines from the said planes of hyper spectral cube during the advancing of the wrapping material (2, 3) itself.

7. Method for controlling a wrapping machine of the tobacco industry comprising the method of inspection according to one of the claims from 1 to 6, wherein the method for controlling also comprises the step of modifying the application of the additional material (3) on the wrapping material (2) on the basis of the quality index of the inspected wrapping material (2, 3).

8. System of inspection (1) of a wrapping material (2, 3) in a wrapping machine of the tobacco industry, wherein the wrapping material (2, 3) comprises a wrapping component (2) on which an additional material is applied (3), the system of inspection (1) comprising:
- a hyperspectral inspection station (10, 11) which is configured for implementing, in a configuration step, a hyperspectral analysis of the wrapping material (2) and/or of the additional material (3) during at least two subsequent moments of time for obtaining a set of reference spectra corresponding to changes of characteristics of the wrapping component (2) and/or of the additional material (3) over time and further configured for storing, in the configuration step, in succession the plurality of reference spectra of the wrapping component (2) and/or of the additional material (3) at set intervals of time during a step of drying of the additional material (3);
- a conveyor for advancing the wrapping material (2, 3) along a predetermined advancing path (P1) through the inspection station (10, 11), the inspection station (10, 11) being configured for implementing, during an operational working step, a hyperspectral analysis of the wrapping material (2, 3) in order to obtain a hyperspectral image of the wrapping material (2, 3);
- a processing device (14), which is configured for processing, during the operational step, the acquired hyperspectral image so as to identify the changes of characteristics of the wrapping component (2) and/or of the additional material (3) inspected by means of the reference spectra and reconstruct a hyperspectral map indicating the identified changes of characteristics of the wrapping material (2) and/or in the inspected additional material (3); wherein the processing device (14) is also configured to analyse the reconstructed hyperspectral map for the purpose of attributing a quality index to the wrapping material.

9. System of inspection according to claim 8, wherein the inspection station (10, 11) comprises an illuminator (10), configured for lighting at least one line of the wrapping material (2, 3) by means of a light containing a plurality of wavelength, and a hyperspectral optical device (11) configured for receiving at least one line of reflected light from the wrapping material (2, 3) and obtaining a corresponding plane of a hyper spectral cube and reconstructing the hyperspectral image through lines from the said planes of hyper spectral cube during the advancing of the wrapping material (2, 3) itself.

## Patentansprüche

1. Verfahren zur Inspektion eines Einwickelmaterials (2, 3) in einer Wickelmaschine in der Tabakindustrie, wobei das Einwickelmaterial (2, 3) eine Wickelkomponente (2) aufweist, an der wenigstens ein zusätzliches Material appliziert ist (3); wobei das Verfahren zur Inspektion Folgendes aufweist:
- einen anfänglichen Konfigurationsschritt, der den Schritt aufweist:
- Implementieren einer hyperspektralen Analyse der Einwickelkomponente (2) und/oder des zusätzlichen Materials (3) während wenigstens zwei aufeinanderfolgender Zeipunkte, um einen Satz von Referenzspektren zu erhalten, die Veränderungen über die Zeit von Charakteristiken der Einwickelkomponenten (2) und/oder des zusätzlichen Materials (3) entsprechen;
- aufeinanderfolgendes Speichern der Mehrzahl von Referenzspektren der Einwickelkomponente (2) und/oder des zusätzlichen Materials (3) zu vorbestimmten Zeitintervallen während eines Schrittes des Trocknens des zusätzlichen Materials (3);
- einen arbeitsmäßigen Schritt, der die Schritte aufweist:
- Vorwärtsbewegen des Einwickelmaterials (2, 3) entlang eines vorbestimmten Vorwärtsweges (P1);
- Implementieren einer hyperspektralen Analyse des Einwickelmaterials (2, 3) während der Vorwärtsbewegung um ein hyperspektrales Bild des Einwickelmaterials (2, 3) zu erhalten;
- Verarbeiten des erhaltenen hyperspektralen Bildes mit Hilfe der Referenzspektren, um die Veränderungen von Charakteristiken der Einwickelkomponente (2) und/oder des zusätzlichen Materials (3) zu identifizieren;
- Rekonstruieren einer hyperspektralen Karte, die die identifizierten Veränderungen von Charakteristiken der Wickelkomponente (2) und/oder des zusätzlichen Materials (3) anzeigt;
- Analysieren der rekonstruierten hyperspektralen Karte, um dem Einwickelmaterial einen Qualitätsindex zuzuordnen.

2. Inspektionsverfahren nach Anspruch 1, bei dem der Konfigurationsschritt ferner einen Berechnungsschritt umfasst, um die Dauer des Trocknungsschritts zu berechnen, wobei die Dauer zwischen einer Lieferung des zusätzlichen Materials (3) und einer vollständigen Trocknung des zusätzlichen Materials (3) selbst eingeschlossen ist, wobei die vollständige Trocknung durch die Tatsache identifiziert ist, dass zwei aufeinanderfolgende gespeicherte Spektren des zusätzlichen Materials (3) über die Zeit unveränderlich sind.

3. Inspektionsverfahren nach irgendeinem der vorhergehenden Ansprüche, bei dem der Konfigurationsschritt auch einen Definitionsschritt zum Definieren einer Folge von Referenzkarten aufweist, von denen jede mit einem unterschiedlichen Qualitätsindex des Einwickelmaterials (2, 3) zusammenhängt, wobei der Qualitätsindex bestimmt wird, falls das zusätzliche Material (3) auf das Einwickelmaterial (2) in vorbestimmten Bereichen appliziert wird, durch eine Raumanordnung des zusätzlichen Materials (3) in der Wickelkomponente (2) in den vorbestimmten Bereichen und/oder durch Veränderungen von Charakteristiken der Wickelkomponente (2) und/oder des zusätzlichen Materials (3), das in der Referenzkarte vorhanden ist.

4. Inspektionsverfahren nach Anspruch 3, bei dem der Qualitätsindex auch durch eine Form und durch einen Qualitätswert der genannten Bereiche bestimmt wird.

5. Inspektionsverfahren nach Anspruch 3, oder 4, bei dem der Schritt des Analysierens der rekonstruierten hyperspektralen Karte einen Vergleichsschritt zum Vergleichen der rekonstruierten hyperspektralen Karte mit den Karten der Folge von Referenzkarten aufweist, das Auswählen einer Referenzkarte, die der rekonstruierten hyperspektralen Karte am ähnlichsten ist, und das Zuordnen zu dem Einwickelmaterial (2, 3) des Qualitätsindex, der mit der ausgewählten Referenzkarte zusammenhängt.

6. Inspektionsverfahren nach irgendeinem der vorhergehenden Ansprüche, bei dem das Implementieren einer hyperspektralen Analyse des Einwickelmaterials (2, 3) zum Erhalten eines hyperspektrales Bildes die folgenden Schritte umfasst:
- einen Schritt des Beleuchtens von wenigstens einer Linie des Einwickelmaterials (2, 3) mit Hilfe eines Lichtes, das eine Mehrzahl von Wellenlängen aufweist;
- einen Schritt des Erhaltens von wenigstens einer Linie von reflektiertem Licht von dem Verpackungsmaterial (2, 3) mit Hilfe einer hyperspektralen optischen Einrichtung (11), um eine entsprechende Ebene eines hyperspektralen Würfels zu erhalten;
- einen Schritt des Rekonstruierens des hyperspektralen Bildes über Linien von den Ebenen des hyperspektralen Würfels während des Vorwärtsbewegens des Einwickelmaterials (2, 3) selbst.

7. Verfahren zum Kontrollieren einer Wickelmaschine in der Tabakindustrie umfassend das Inspektionsverfahren nach irgendeinem der Ansprüche 1 bis 6, bei dem das Verfahren zum Kontrollieren auch den Schritt des Modifizierens der Applikation des zusätzlichen Materials (3) auf das Verpackungsmaterial (2) auf der Basis des Qualitätsindex des inspizierten Verpackungsmaterials (2, 3) umfasst.

8. System zur Inspektion (1) eines Verpackungsmaterials (2, 3) in einer Wickelmaschine in der Tabakindustrie, wobei das Verpackungsmaterial (2, 3) eine Wickelkomponente (2) aufweist, an der ein zusätzliches Material (3) appliziert ist, wobei das Inspektionssystem (1) Folgendes aufweist:
- eine hyperspektrale Inspektionsstation (10, 11), die dazu ausgebildet ist, in einem Konfigurationsschritt eine hyperspektrale Analyse des Einwickelmaterials (2) und/oder des zusätzlichen Materials (3) während wenigstens zwei aufeinanderfolgender Zeitpunkte zu implementieren, um einen Satz von Referenzspektren zu erhalten, die Veränderungen von Charakteristiken der Einwickelkomponente (2) und/oder des zusätzlichen Materials (3) über die Zeit entsprechen und ferner dazu ausgebildet ist, um in den Konfigurationsschritt nacheinander die Mehrzahl von Referenzspektren der Einwickelkomponente (2) und/oder des zusätzlichen Materials (3) zu vorbestimmten Zeitintervallen während eines Trocknungsschritts des zusätzlichen Materials (3) zu speichern;
- einen Förderer zum Vorwärtsbewegen des Einwickelmaterials (2, 3) entlang eines vorbestimmten Vorwärtsweges (P1) durch die Inspektionsstation (10, 11), wobei die Inspektionsstation (10, 11) dazu ausgebildet ist, während eines betriebsmäßigen Arbeitsschritts eine hyperspektrale Analyse des Einwickelmaterials (2, 3) zu erhalten, um ein hyperspektrales Bild des Einwickelmaterials (2, 3) zu erhalten;
- eine Verarbeitungseinrichtung (14), die dazu ausgebildet ist, während des arbeitsmäßigen Schritts das erhaltene hyperspektrale Bild zu verarbeiten, um so die Veränderungen von Charakteristiken der Wickelkomponente (2) und/oder des zusätzlichen Materials (3) zu identifizieren, das mit Hilfe der Referenzspektren inspiziert wird, und um eine hyperspektrale Karte zu erzeugen, welche die identifizierten Veränderungen von Charakteristiken des Einwickelmaterials (2) und/oder des zusätzlichen Materials (3) anzeigt; wobei die Verarbeitungseinrichtung (14) auch dazu ausgebildet ist, die rekonstruierte hyperspektrale Karte zum Zweck der Zuordnung eines Qualitätsindex zu dem Verpackungsmaterial zu analysieren.

9. System zur Inspektion nach Anspruch 8, bei dem die Inspektionsstation (10, 11) eine Lichtquelle (10) zur Beleuchtung von wenigstens einer Linie des Einwickelmaterials (2, 3) mit Hilfe eines Lichtes aufweist, das eine Mehrzahl von Wellenlängen hat, und mit einer hyperspektralen, optischen Einrichtung, die dazu ausgebildet ist, wenigstens eine Linie von reflektiertem Licht von dem Einwickelmaterial (2, 3) zu erhalten und eine entsprechende Ebene eines hyperspektralen Würfels zu erhalten und das hyperspektrale Bild über Linien von den Ebenen des hyperspektralen Würfels während der Vorwärtsbewegung des Einwickelmaterials (2, 3) selbst zu rekonstruieren.

## Revendications

1. Procédé d'inspection d'un matériau d'emballage (2, 3) dans une machine d'emballage de l'industrie du tabac, dans lequel le matériau d'emballage (2, 3) comprend un composant d'emballage (2) sur lequel au moins une matière additionnelle (3) est appliquée ; le procédé d'inspection comprenant :
- une étape de configuration initiale, comprenant les étapes de :
- mise en oeuvre d'une analyse hyperspectrale du composant d'emballage (2) et/ou de la matière additionnelle (3) pendant au moins deux instants subséquents pour obtenir un ensemble de spectres de référence correspondant à des variations dans le temps de caractéristiques du composant d'emballage (2) et/ou de la matière additionnelle (3) ;
- stockage successivement de la pluralité de spectres de référence du composant d'emballage (2) et/ou de la matière additionnelle (3) à des intervalles de temps réglés pendant une étape de séchage de la matière additionnelle (3)
- une étape opérationnelle de travail, comprenant les étapes de :
- avance du matériau d'emballage (2, 3) le long d'un trajet d'avance (P1) prédéterminé ;
- mise en oeuvre d'une analyse hyperspectrale du matériau d'emballage (2, 3) pendant ladite avance pour obtenir une image hyperspectrale du matériau d'emballage (2, 3) ;
- traitement de l'image hyperspectrale acquise au moyen des spectres de référence pour identifier les variations de caractéristiques du composant d'emballage (2) et de la matière additionnelle (3) ;
- reconstruction d'une carte hyperspectrale indiquant les variations identifiées de caractéristiques du composant d'emballage (2) et/ou de la matière additionnelle (3) ;
- analyse de la carte hyperspectrale reconstruite afin d'attribuer un indice de qualité au matériau d'emballage.

2. Procédé d'inspection selon la revendication 1, dans lequel l'étape de configuration comprend également une étape de calcul pour calculer la durée de l'étape de séchage, ladite durée étant incluse entre une distribution de la matière additionnelle (3) et un séchage complet de la matière additionnelle (3) lui-même, lequel séchage complet est identifié par le fait que deux spectres stockés subséquents de la matière additionnelle (3) sont invariants dans le temps.

3. Procédé d'inspection selon l'une des revendications précédentes, dans lequel l'étape de configuration comprend également une étape de définition pour définir un ensemble de cartes de référence, chacune d'elles étant associée à un indice de qualité différent du matériau d'emballage (2, 3), ledit indice de qualité étant déterminé, si la matière additionnelle (3) est appliquée au matériau d'emballage (2) dans des zones préétablies, par un agencement spatial de la matière additionnelle (3) dans le composant d'emballage (2) dans les zones préétablies et/ou par des variations de caractéristiques du composant d'emballage (2) et/ou de la matière additionnelle (3) présentes dans la carte de référence.

4. Procédé d'inspection selon la revendication 3, dans lequel l'indice de qualité est également déterminé par une forme et par une valeur de qualité desdites zones.

5. Procédé d'inspection selon la revendication 3 ou 4, dans lequel l'étape d'analyse de la carte hyperspectrale reconstruite comprend une étape de comparaison pour comparer la carte hyperspectrale reconstruite aux cartes de l'ensemble de cartes de référence, sélectionner une carte de référence qui est la plus similaire à la carte hyperspectrale reconstruite et attribuer au matériau d'emballage (2, 3) l'indice de qualité associé à la carte de référence sélectionnée.

6. Procédé d'inspection selon l'une des revendications précédentes, dans lequel la mise en oeuvre d'une analyse hyperspectrale du matériau d'emballage (2, 3) pour obtenir une image hyperspectrale comprend les étapes suivantes :
- une étape d'éclairage d'au moins une ligne du matériau d'emballage (2, 3) au moyen d'une lumière contenant une pluralité de longueurs d'onde ;
- une étape de réception d'au moins une ligne de lumière réfléchie par le matériau d'emballage (2, 3) au moyen d'un dispositif optique hyperspectral (11) pour obtenir un plan correspondant d'un cube hyperspectral ;
- une étape de reconstruction de l'image hyperspectrale par le biais des lignes provenant desdits plans de cube hyperspectral pendant l'avance du matériau d'emballage (2, 3) lui-même.

7. Procédé de commande d'une machine d'emballage de l'industrie du tabac comprenant le procédé d'inspection selon l'une des revendications 1 à 6, dans lequel le procédé de commande comprend également l'étape de modification de l'application de la matière additionnelle (3) sur le matériau d'emballage (2) sur la base de l'indice de qualité du matériau d'emballage (2, 3) inspecté.

8. Système d'inspection (1) d'un matériau d'emballage (2, 3) dans une machine d'emballage de l'industrie du tabac, dans lequel le matériau d'emballage (2, 3) comprend un composant d'emballage (2) sur lequel une matière additionnelle (3) est appliquée, le système d'inspection (1) comprenant :
- une station d'inspection hyperspectrale (10, 11) qui est configurée pour mettre en oeuvre, à une étape de configuration, une analyse hyperspectrale du matériau d'emballage (2) et/ou de la matière additionnelle (3) pendant au moins deux instants subséquents pour obtenir un ensemble de spectres de référence correspondant à des variations de caractéristiques du composant d'emballage (2) et/ou de la matière additionnelle (3) dans le temps et en outre configurée pour stocker, à l'étape de configuration, successivement la pluralité de spectres de référence du composant d'emballage (2) et/ou de la matière additionnelle (3) à des intervalles de temps réglés pendant une étape de séchage de la matière additionnelle (3),
- un convoyeur pour faire avancer le matériau d'emballage (2, 3) le long d'un trajet d'avance (P1) prédéterminé à travers la station d'inspection (10, 11), la station d'inspection (10, 11) étant configurée pour mettre en oeuvre, pendant une étape de travail opérationnelle, une analyse hyperspectrale du matériau d'emballage (2, 3) afin d'obtenir une image hyperspectrale du matériau d'emballage (2, 3) ;
- un dispositif de traitement (14), qui est configuré pour traiter, pendant l'étape opérationnelle, l'image hyperspectrale acquise de manière à identifier les variations de caractéristiques du composant d'emballage (2) et/ou de la matière additionnelle (3) inspectée au moyen des spectres de référence et reconstruire une carte hyperspectrale indiquant les variations identifiées de caractéristiques du matériau d'emballage (2) et/ou dans la matière additionnelle (3) inspectée ; dans lequel le dispositif de traitement (14) est également configuré pour analyser la carte hyperspectrale reconstruite aux fins d'attribuer un indice de qualité au matériau d'emballage.

9. Système d'inspection selon la revendication 8, dans lequel la station d'inspection (10, 11) comprend un dispositif d'éclairage (10), configuré pour éclairer au moins une ligne du matériau d'emballage (2, 3) au moyen d'une lumière contenant une pluralité de longueurs d'onde, et un dispositif optique hyperspectral (11) configuré pour recevoir au moins une ligne de lumière réfléchie par le matériau d'emballage (2, 3) et obtenir un plan correspondant d'un cube hyperspectral et reconstruire l'image hyperspectrale par le biais de lignes provenant desdits plans de cube hyperspectral pendant l'avance du matériau d'emballage (2, 3) lui-même.
